# EUROPÄISCHE PATENTSCHRIFT

(11) **EP 4 238 897 B1**
(45) Veröffentlichungstag und Bekanntmachung des Hinweises auf die Patenterteilung: **30.04.2025**
(21) Anmeldenummer: 22159996.2
(22) Anmeldetag: 03.03.2022
(51) Int. Cl.: B65G 1/04, B65G 57/30

(54) **BLOCKLAGERANORDNUNG**
BLOCK STORAGE ARRANGEMENT
ARRANGEMENT D'ENTREPÔT EN BLOC

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Morawietz, Timm, 66636 Tholey-Überroth (DE); Nowack, Adrian, 55131 Mainz (DE)
(74) Vertreter: Keil & Schaafhausen Patentanwälte PartGmbB

(56) Entgegenhaltungen:
- EP-A1- 3 782 931
- DE-A1- 19 849 391
- JP-A- 2009 040 554
- JP-A- S58 162 440
- NL-A- 7 611 143

## Beschreibung

Die vorliegende Erfindung betrifft eine Blocklageranordnung mit mehreren Behälteraufnahmeräumen, mindestens einem Behälter, einem in Schwerkraftrichtung unterhalb der Behälteraufnahmeräume angeordneten Beschickungsraum, einer Durchgangsöffnung zwischen jedem Behälteraufnahmeraum und dem Beschickungsraum, und einer Halteeinrichtung an der Durchgangsöffnung, die mindestens eine Halteklinke aufweist, die zwischen einer Halteposition und einer Freigabeposition verschwenkbar ist, wobei die Halteklinke einen Ausschnitt aufweist, der in der Halteposition in die Durchgangsöffnung gerichtet ist._

DE 198 49 391 A1 zeigt eine Blocklageranordnung, nach dem Oberbegriff des Anspruchs 1, in der Behälter in mehreren nebeneinander und/oder hintereinander angeordneten Stapeln gelagert werden. Der jeweils unterste Behälter eines Stapels ist an gegenüberliegenden Halteklinken gehalten, die aus einer Sperrstellung, in der sie den Behälter halten, in eine Freigabestellung verschwenkt werden können, in der der Behälter an den Halteklinken vorbeigeführt werden kann. Die Halteklinken weisen eine Ausnehmung auf, die eine Steuerfläche bildet, mit der Schaltelemente zusammenwirken können, um die Halteklinke aus der Sperrstellung in die Freigabestellung zu verschwenken.

Eine weitere Blocklageranordnung ist beispielsweise aus EP 3 782 930 A1 bekannt.

Eine Blocklageranordnung wird auch als "Stapellageranordnung" bezeichnet.

In einer Blocklageranordnung werden Behälter in Form von Stapeln gelagert. Die Stapel sind dann jeweils in einem Behälteraufnahmeraum angeordnet. Da die Behälter in einem Stapel aufeinander stehen, lässt sich in vertikaler Richtung, also in Schwerkraftrichtung, eine hohe Packungsdichte und damit eine gute Ausnutzung des zur Verfügung stehenden Bauraums erreichen. Die Behälteraufnahmeräume können relativ dicht nebeneinander angeordnet sein, so dass man auch in horizontaler Richtung eine gute Ausnutzung des zur Verfügung stehenden Raumes erreichen kann.

Im vorliegenden Fall werden die Behälter von unten in die Behälteraufnahmeräume eingebracht und auch nach unten aus den Behälteraufnahmeräumen entnommen. Hierzu wird der jeweilige Behälter durch die Durchgangsöffnung zwischen dem Behälteraufnahmeraum und dem Beschickungsraum geführt.

Um einen Behälterstapel oder auch nur einen einzigen Behälter in dem Behälteraufnahmeraum zu halten, ist die Halteeinrichtung vorgesehen, die mit einer oder mehreren Halteklinken den jeweils untersten Behälter eines Stapels festhält, wenn sich die Halteklinke in der Halteposition befindet. Um einen Behälter entnehmen zu können, wird der Behälter oder der Behälterstapel zunächst angehoben, bis der Behälter oder der unterste Behälter eines Stapels von der Halteklinke freikommt. Die Halteklinke wird dann in die Freigabeposition verschwenkt und der Behälter kann an der Halteklinke vorbei in Schwerkraftrichtung nach unten bewegt werden.

Um auch eine größere Anzahl von Behältern in einem Stapel unterbringen zu können, muss die Halteklinke in ausreichendem Maße mit dem Behälter in Eingriff kommen. Um die notwendige Aufstandsfläche des Behälters auf der Halteklinke zu gewährleisten, wenn sich die Halteklinke in der Halteposition befindet, ist eine Form des Behälters notwendig, bei der ein Vorsprung in den Behälterinnenraum hineinragt. Dies hat zur Folge, dass der Behälterinnenraum nicht vollständig genutzt werden kann, so dass man für einen Gegenstand mit Außenmaßen von 600 x 400 mm, beispielsweise einen derartigen Karton, entweder einen Behälter benötigt, der entsprechend größer ist, oder den Karton nicht unterbringen kann.

Die Vergrößerung des Behälterinnenraumes wiederum führt zu einer nicht optimalen Ausnutzung des Bauraums einer Blocklageranordnung.

JP 2009-40554 A beschreibt eine Behälterladevorrichtung, in der mehrere Behälter übereinander angeordnet werden können. Allerdings sind von den Behältern nicht alle in einem Stapel angeordnet, sondern der unterste Behälter befindet sich von dem Stapel getrennt. Die Behälter werden durch eine seitliche Öffnung oben in einen Behälteraufnahmeraum eingebracht und durch eine seitliche Entnahmeöffnung unten aus dem Behälteraufnahmeraum entnommen. Ein Behälter, der sich vor der Entnahmeöffnung befindet, drückt dabei zwei Beine einer Halteklinke auseinander, die oberhalb dieser beiden Beine in einem Lager drehbar gelagert ist. Damit schwenken die oberen Enden der Halteelemente nach innen und halten den untersten Behälter des Stapels fest. Wenn der unterste Behälter entnommen wird, ziehen Federn die Beine zusammen und der unterste Behälter des Stapels wird freigegeben und fällt nach unten. Dabei spreizt er die Beine wieder, so dass der nächste Behälter des Stapels gehalten werden kann. Das obere Ende der Halteelemente ist nach innen gebogen und weist eine Ausnehmung auf.

NL 7 611 143 A beschreibt einen Speicher für parallelepipedische Körper, wo die Ausrichtung des Körpers in den Stapel in zwei alternativen Positionen erfolgen kann. Der Speicher weist an seinen Ecken jeweils zwei Führungen auf, wobei ein Körper jeweils so gelegt wird, dass er in die Führung mit der geraden Ordnungszahl eingelegt wird und der nächste Körper so gelegt wird, dass er in die Führungen mit der ungeraden Ordnungszahl eingelegt wird. Dadurch haben die Körper einen winkelmäßigen Versatz um eine vertikale Achse, so dass verhindert wird, dass sich die Körper gegenseitig ineinander verhaken.

JP S58-162440 A zeigt eine Werkstückspeichereinrichtung zur Aufnahme von Werkstücken, die von unten eingelagert und nach oben entnommen werden sollen. Die Werkstücke werden dabei von einer Hubeinrichtung angehoben. Dabei werden sie von Zuführfingern gehalten. Wenn die Hubeinrichtung angehoben wird, werden die Werkstücke an Haltefingern vorbeigeführt, die dabei nach oben verschwenkt werden. Wenn die Hubeinrichtung abgesenkt wird, kommen die Werkstücke auf den Haltefingern zur Ablage und die Zuführfinger werden nach oben geschwenkt, so dass sie an dem Werkstück vorbeitreten können.

Der Erfindung liegt die Aufgabe zugrunde, den Bauraum eines Blocklagers zum Einlagern von Gegenständen gut zu nutzen.

Diese Aufgabe wird bei einer Blocklageranordnung der eingangs genannten Art dadurch gelöst, dass der Ausschnitt an die Form einer Eckengeometrie des Behälters angepasst ist.

Wenn sich die Halteklinke in der Halteposition befindet, dann kann der Behälter in den Ausschnitt der Halteklinke eintreten. Der dadurch gewonnene Raum macht es möglich, auf eine Ausformung des Behälters zu verzichten, die in den Behälterinnenraum vorsteht. Der Behälterinnenraum bleibt also in vollem Umfang frei zur Aufnahme von Gegenständen, beispielsweise Kartons, auch wenn diese Gegenstände quaderförmig ausgebildet sind. Auch ein quaderförmiger Gegenstand, wie beispielsweise ein Karton, kann in den Behälter eingesetzt werden und den Behälter vollständig ausfüllen, so dass der zur Verfügung stehende Bauraum optimal genutzt werden kann. Durch die Anpassung der Form der Ausnehmung an die Form der Eckengeometrie des Behälters ist es möglich, den Behälter und die Halteklinke so aufeinander abzustimmen, dass die Halteklinke den Behälter in ausreichendem Maße untergreifen kann, wenn sich die Halteklinke in der Halteposition befindet, ohne dass man an dem Behälter eine Ausformung vorsehen müsste, die in den Behälterinnenraum vorsteht.

Vorzugsweise weist die Halteklinke eine Schwenkachse auf, die sowohl mit einer Längsrichtung als auch mit einer Querrichtung der Durchgangsöffnung einen Winkel von weniger als 75° einschließt. Die Halteklinke ist damit an einer Ecke der Durchgangsöffnung angeordnet und kann sowohl in Längsrichtung als auch in Querrichtung der Durchgangsöffnung auf den Behälter wirken.

Vorzugsweise ist der Ausschnitt V-förmig ausgebildet. Ein V-förmiger Ausschnitt ermöglicht es, dass die Halteklinke den Behälter mit zwei "Armen" unterstützt, wobei die Arme in unterschiedliche Richtungen gerichtet sind. Damit ist es möglich, den Behälter in die Richtungen der beiden Arme in ausreichender Weise abzustützen, so dass ein Kippen des Behälters vermieden werden kann.

Vorzugsweise weist der Ausschnitt zwei Seitenflanken auf, deren in die Durchgangsöffnung gerichteten Enden einen Winkel im Bereich von 75° bis 105° miteinander einschließen. Vorzugsweise hat dieser Winkel eine Größe von etwa 90°, so dass die Halteklinke einen Behälter, der einen rechteckigen Grundriss hat, in optimaler Weise aufnehmen kann.

Bevorzugterweise weist der Behälter eine Behälteröffnung auf, die von einer Behälterwand umgeben ist, und die Eckengeometrie ist am von der Behälteröffnung abgewandten Ende der Behälterwand angeordnet. Der Behälter wird dann an seinem in Schwerkraftrichtung unteren Ende unterstützt, so dass die Behälterwand nicht durch die Masse des im Behälter aufgenommenen Lagerguts belastet wird.

Vorzugsweise weist die Behälterwand im Bereich der Eckengeometrie einen Rücksprung auf. Damit wird am Behälter eine Aufstandsfläche geschaffen, mit der er auf der Halteklinke aufstehen kann.

Vorzugsweise weist der Behälter einen Behälterboden auf und die Eckengeometrie streckt sich in Richtung auf die Behälteröffnung maximal so weit wie der Behälterboden. Die Eckengeometrie kann dann auf eine "Höhe" begrenzt werden, die sich innerhalb des Behälterbodens befindet. Alles, was oberhalb des Behälterbodens angeordnet ist, kann dann ungestört ausgebildet werden, so dass der gesamte Behälterinnenraum für die Aufnahme von Lagergütern zur Verfügung steht, was insbesondere dann von Vorteil ist, wenn diese Lagergüter in Form von quaderförmigen Kartons oder Packungen vorliegen.

Bevorzugterweise weist die Behälterwand eine Längsseite und eine Querseite auf, die im Wesentlichen unter einem rechten Winkel zueinander angeordnet und durch eine Verbindungswand miteinander verbunden sind, die zwischen der Eckengeometrie und der Behälteröffnung angeordnet ist und mit der Längsseite und der Querseite jeweils einen Winkel von maximal 150° einschließt. Vorzugsweise schließt die Verbindungswand mit der Längsseite und der Querseite jeweils einen Winkel von etwa 135° ein. Die Verbindungswand ist sozusagen diagonal zur Längsseite und der Querseite angeordnet. Damit kann man erreichen, dass sich oberhalb der Halteklinke unmittelbar eine Wand befindet, die in der Lage ist, auch größere Belastungen aufzunehmen, die sich beispielsweise dadurch ergeben, wenn ein Stapel mit einer großen Anzahl von Behältern in dem Behälteraufnahmeraum aufgenommen ist.

Vorzugsweise ist die Halteklinke in der Freigabeposition in einer Vertiefung eines Führungselements versenkt. Die Halteklinke steht also in der Freigabeposition nicht vor, sondern bildet mit dem Führungselement eine weitgehend glatte Fläche, so dass sich beim Anheben oder beim Absenken eines Behälters durch die Durchgangsöffnung kein Verhaken des Behälters ergeben kann. Damit wird die Betriebssicherheit der Blocklageranordnung erhöht.

Vorzugsweise weist das Führungselement eine Kontur auf, die an die Form der Verbindungswand angepasst ist. Die Kontur muss nicht identisch zur Form der Verbindungswand sein. Die Kontur kann zu der Verbindungswand einen gewissen Abstand aufweisen, wenn sich der Behälter durch die Durchgangsöffnung bewegt. Das Führungselement kann aber eine gewisse Positionierung des Behälters bewirken, so dass eine Übergabe des Behälters an ein Beschickungsfahrzeug, das im Beschickungsraum verfahren wird, erleichtert werden kann.

Vorzugsweise weist das Führungselement an seiner in Schwerkraftrichtung oberen Seite und/oder an seiner in Schwerkraftrichtung unteren Seite eine Einführfase auf. Die Einführfase ist leicht angeschrägt, so dass das Einfädeln eines Behälters in die Durchgangsöffnung erleichtert wird.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Blocklageranordnung,
- Fig. 2: einen Teil einer Durchgangsöffnung der Blocklageranordnung,
- Fig. 3: ein Eckverbinder mit Halteklinke,
- Fig. 4: einen Behälter in perspektivischer Darstellung und
- Fig. 5: den Behälter von Fig. 4 in perspektivischer Darstellung aus einem anderen Blickwinkel.

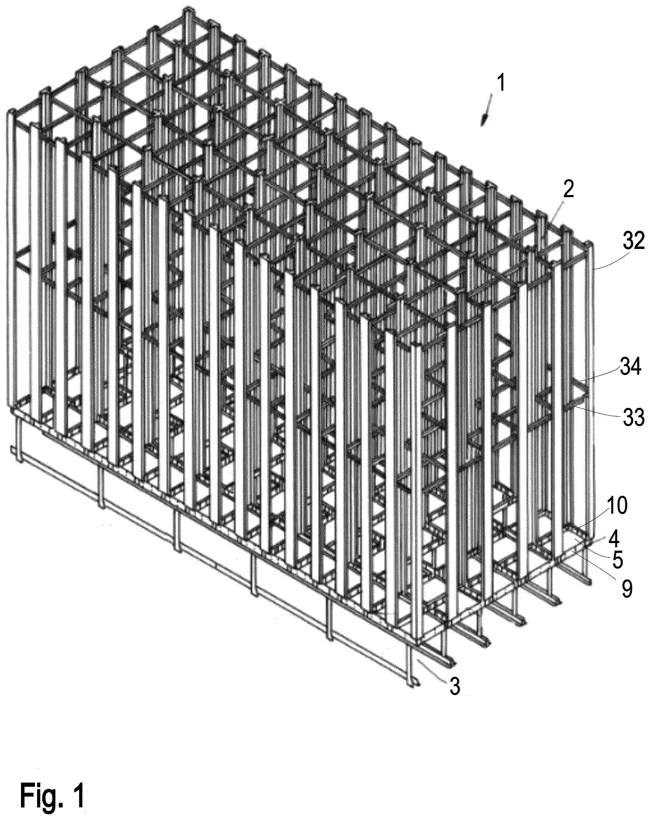

Fig. 1 zeigt stark schematisiert eine Blocklageranordnung 1 mit mehreren Behälteraufnahmeräumen 2, die in Form von Reihen nebeneinander und in Form von Spalten hintereinander angeordnet sind. Die Behälteraufnahmeräume 2 sind also matrixartig angeordnet. Jeder Behälteraufnahmeraum 2 kann einen Behälter oder einen Stapel von mehreren Behältern aufnehmen.

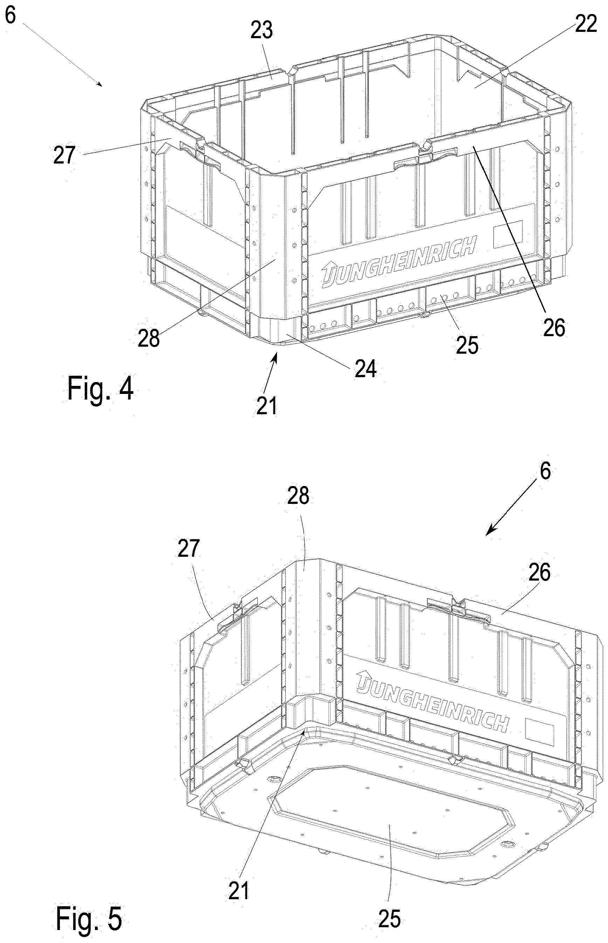

In Schwerkraftrichtung unterhalb der Behälteraufnahmeräume 2 befindet sich ein Beschickungsraum 3. Zwischen den Behälteraufnahmeräumen 2 und dem Beschickungsraum 3 ist eine Rahmenanordnung 4 angeordnet, die für jeden Behälteraufnahmeraum 2 eine Durchgangsöffnung 5 aufweist. Die Durchgangsöffnung 5 ist so ausgebildet, dass durch die Durchgangsöffnung 5 ein Behälter 6 (Fig. 4 und 5) vom Beschickungsraum 3 in den Behälteraufnahmeraum 2 bewegt werden kann oder von einem Behälteraufnahmeraum 2 in den Beschickungsraum 3 bewegt werden kann.

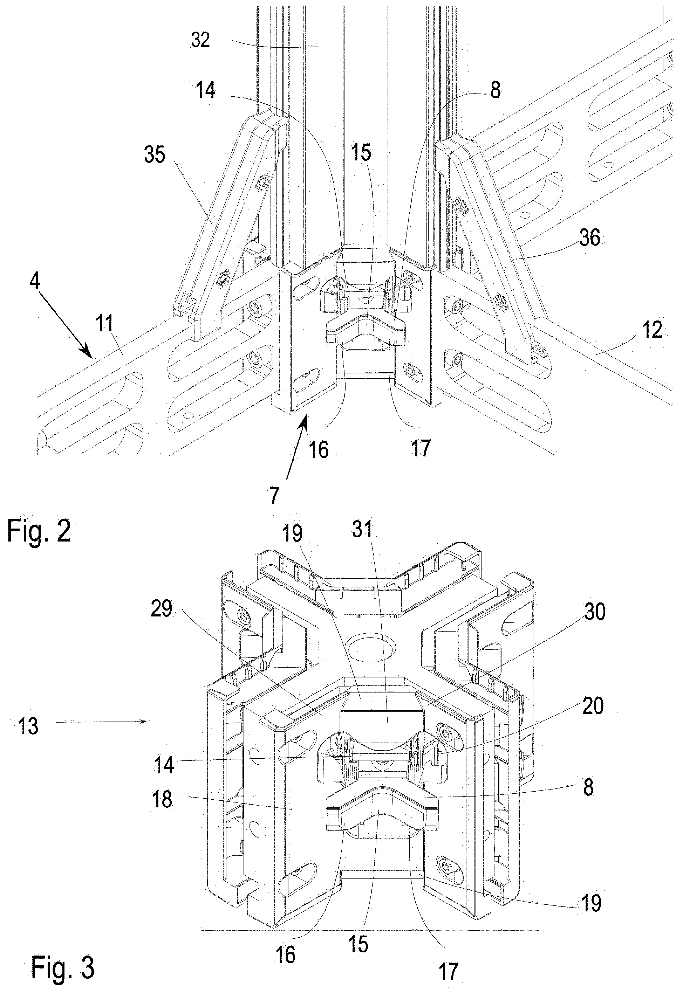

Eine Halteeinrichtung 7 (Fig. 2) ist an jeder Durchgangsöffnung 5 angeordnet. Die Halteeinrichtung 7 weist mindestens eine Halteklinke 8 auf, die zwischen einer in Fig. 2 und 3 dargestellten Halteposition und einer Freigabeposition verschwenkbar ist. In der Halteposition kann sie einen Behälter 6 festhalten. In der Freigabeposition ist die Durchgangsöffnung 5 frei für den Durchgang eines Behälters 6.

Die Durchgangsöffnung 5 weist an ihrer Längsseite 9 zwei Längsträger 11 auf, von denen einer in Fig. 2 dargestellt ist. Weiterhin weist die Durchgangsöffnung 5 an ihrer Querseite 10 zwei Querträger 12 auf, von denen ebenfalls einer in Fig. 2 dargestellt ist. Ein Längsträger 11 und ein Querträger 12 sind über einen Eckverbinder 13 (Fig. 3) miteinander verbunden. In dem Eckverbinder 13 ist die Halteklinke 8 angeordnet.

Die Halteklinke 8 weist eine Schwenkachse 14 auf, die sowohl mit der Längsseite 8 als auch mit der Querseite 10 einen Winkel von weniger als 75° einschließt. Vorzugsweise schließt die Schwenkachse 14 sowohl mit der Längsseite 9 als auch mit der Querseite 10 einen Winkel von etwa 45° ein.

Die Halteklinke 8 weist einen Ausschnitt 15 auf, der in der Halteposition (Fig. 2 und 3) in die Durchgangsöffnung 5 gerichtet ist. Der Ausschnitt 15 ist V-förmig ausgebildet. Der Ausschnitt 15 weist eine erste Seitenflanke 16 und eine zweite Seitenflanke 17 auf. Zumindest die Enden der Seitenflanken 16, 17, die in die Durchgangsöffnung 5 gerichtet sind, schließen einen Winkel im Bereich von 75° bis 105° miteinander ein, bevorzugterweise schließen die Enden der beiden Seitenflanken 16, 17 einen Winkel von ungefähr 90° ein.

Der Eckverbinder 13 weist für jede Durchgangsöffnung 5 ein Führungselement 18 auf, das an seiner in Schwerkraftrichtung oberen Seite eine Einführfase 19 aufweist, die leicht angeschrägt ist. Zusätzlich oder alternativ kann vorgesehen sein, dass das Führungselement 18 an seiner in Schwerkraftrichtung unteren Seite ebenfalls eine Einführfase 19 aufweist.

Das Führungselement 18 weist eine Vertiefung oder Ausnehmung 20 auf, in die die Halteklinke 8 versenkt wird, wenn die Halteklinke 8 in die Freigabeposition verschwenkt wird. In diesem Fall steht die Halteklinke 8 nicht mehr über die der Durchgangsöffnung 5 zugewandten Seite des Führungselements über, so dass ein Behälter 6 problemlos durch die Durchgangsöffnung 5 treten kann, wenn sich die Halteklinke 8 in der Freigabeposition befindet. Wenn sich die Halteklinke 8 hingegen in der Halteposition befindet (Fig. 2 und 3), dann kann ein Behälter 6 auf der Halteklinke 8 abgesetzt werden.

Ein hierfür besonders gut geeigneter Behälter 6 ist in den Fig. 4 und 5 dargestellt. Die Blocklageranordnung 1 weist mindestens einen derartigen Behälter auf, der in einem Behälteraufnahmeraum 2 angeordnet ist. Der Behälter 6 weist eine Eckengeometrie 21 auf. Die Form des Ausschnitts 15 ist an die Form der Eckengeometrie 21 des Behälters 6 angepasst. Mit anderen Worten entspricht die Innenkontur der Ausnehmung 15 der Außenkontur der Eckengeometrie 21.

Der Behälter 6 weist eine Behälteröffnung 22 auf, die von einer Behälterwand 23 umgeben ist. Die Eckengeometrie 21 ist am von der Behälteröffnung 22 abgewandten Ende der Behälterwand 23 angeordnet. Im bestimmungsgemäßen Gebrauch, wenn die Behälteröffnung 22 in Schwerkraftrichtung oben angeordnet ist, befindet sich die Eckengeometrie 21 also in Schwerkraftrichtung am unteren Ende des Behälters 6.

Die Eckengeometrie 21 weist einen Rücksprung 24 auf. Der Behälter 6 weist einen Behälterboden 25 auf, wobei sich die Eckengeometrie 21 in eine Richtung auf die Behälteröffnung 22 maximal so weit erstreckt, wie der Behälterboden 25.

Die Behälterwand 23 weist eine Längsseite 26 und eine Querseite 27 auf, die im Wesentlichen unter einem rechten Winkel zueinander angeordnet sind. Zwischen der Längsseite 26 und der Querseite 27 befindet sich eine Verbindungswand 28, die sowohl gegenüber der Längsseite 26 als auch gegenüber der Querseite 27 abgewinkelt ist, wobei der Winkel jeweils maximal 150° beträgt. Im vorliegenden Fall schließt die Verbindungswand sowohl mit der Längsseite 26 als auch mit der Querseite 27 einen Winkel von 135° ein.

Das Führungselement 18 weist eine Kontur auf, die an die Form der Verbindungswand 28 angepasst ist. Vereinfacht ausgedrückt weist die Kontur des Führungselements 2 seitliche Flanken 29, 30 auf, die im Wesentlichen unter einem rechten Winkel zueinanderstehen und dann, wenn der Behälter 6 durch die Durchgangsöffnung 5 geführt wird, parallel zu der Längsseite 26 und der Querseite 27 stehen, und einen Zwischenabschnitt 31, der unter dem Winkel angeordnet ist, unter dem auch die Zwischenwand 28 zu der Längsseite 26 und der Querseite 27 angeordnet ist.

Die Blocklageranordnung 1 weist mehrere Ständer 32 auf, die auf dem Rahmen 4 aufstehen. Die Ständer 32 sind an Ecken der Behälteraufnahmeräume 2 angeordnet und sind untereinander durch Längsstreben 33 und Querstreben 34 miteinander verbunden. Die Ständer 32 sind über Klemmelemente 35, 36 mit dem Rahmen 4 verbunden. Jeder Ständer 32 steht auf einem Eckverbinder 13 auf und ist dort gesichert.

## Patentansprüche

1. Blocklageranordnung (1) mit mehreren Behälteraufnahmeräumen (2), mindestens einem Behälter (6), einem in Schwerkraftrichtung unterhalb der Behälteraufnahmeräume (2) angeordneten Beschickungsraum (3), einer Durchgangsöffnung (5) zwischen jedem Behälteraufnahmeraum (2) und dem Beschickungsraum (3), und einer Halteeinrichtung (7) an der Durchgangsöffnung (5), die mindestens eine Halteklinke (8) aufweist, die zwischen einer Halteposition und einer Freigabeposition verschwenkbar ist, wobei die Halteklinke (8) einen Ausschnitt (15) aufweist, der in der Halteposition in die Durchgangsöffnung (5) gerichtet ist, **dadurch gekennzeichnet, dass** der Ausschnitt (15) an die Form einer Eckengeometrie (21) des Behälters (6) angepasst ist.

2. Blocklageranordnung nach Anspruch 1, **dadurch gekennzeichnet, dass** die Halteklinke (8) eine Schwenkachse (14) aufweist, die sowohl mit einer Längsrichtung (9) als auch mit einer Querrichtung (10) der Durchgangsöffnung (5) einen Winkel von weniger als 75° einschließt.

3. Blocklageranordnung nach Anspruch 1 oder 2, **dadurch gekennzeichnet, dass** der Ausschnitt (15) V-förmig ausgebildet ist.

4. Blocklageranordnung nach einem der Ansprüche 1 bis 3, **dadurch gekennzeichnet, dass** der Ausschnitt (15) zwei Seitenflanken (16, 17) aufweist, deren in die Durchgangsöffnung (5) gerichteten Enden einen Winkel im Bereich von 75° bis 105° miteinander einschließen.

5. Blocklageranordnung nach einem der Ansprüche 1 bis 4, **dadurch gekennzeichnet, dass** der Behälter (6) eine Behälteröffnung (22) aufweist, die von einer Behälterwand (23) umgeben ist, und die Eckengeometrie (21) am von der Behälteröffnung (22) abgewandten Ende der Behälterwand (23) angeordnet ist.

6. Blocklageranordnung nach Anspruch 5, **dadurch gekennzeichnet, dass** die Behälterwand (2) im Bereich der Eckengeometrie (21) einen Rücksprung (24) aufweist.

7. Blocklageranordnung nach einem der Ansprüche 1 bis 6, **dadurch gekennzeichnet, dass** der Behälter (6) einen Behälterboden (25) aufweist und die Eckengeometrie (21) sich in Richtung auf die Behälteröffnung (22) maximal soweit erstreckt wie der Behälterboden (25).

8. Blocklageranordnung nach einem der Ansprüche 5 bis 7, **dadurch gekennzeichnet, dass** die Behälterwand (23) eine Längsseite (26) und eine Querseite (27) aufweist, die im Wesentlichen unter einem rechten Winkel zueinander angeordnet und durch eine Verbindungswand (28) miteinander verbunden sind, die zwischen der Eckengeometrie (21) und der Behälteröffnung (22) angeordnet ist und mit der Längsseite (26) und der Querseite (27) jeweils einen Winkel von maximal 150° einschließt.

9. Blocklageranordnung nach Anspruch 8, **dadurch gekennzeichnet, dass** die Halteklinke (8) in der Freigabeposition in einer Vertiefung (20) eines Führungselements (18) versenkt ist.

10. Blocklageranordnung nach Anspruch 9, **dadurch gekennzeichnet, dass** das Führungselement (18) eine Kontur aufweist, die an die Form der Verbindungswand (28) angepasst ist.

11. Blocklageranordnung nach Anspruch 9 oder 10, **dadurch gekennzeichnet, dass** das Führungselement (18) an seiner in Schwerkraftrichtung oberen Seite und/oder an seiner in Schwerkraftrichtung unteren Seite eine Einführfase (19) aufweist.

## Claims

1. Block storage arrangement (1) having a plurality of container receiving spaces (2), at least one container (6), a loading space (3) arranged in the direction of gravity beneath the container receiving spaces (2), a through-opening (5) between each container receiving space (2) and the loading space (3), and a holding device (7) at the through-opening (5), which has at least one holding latch (8) that can be pivoted between a holding position and a release position, wherein the holding latch (8) has a cutout (15) which, in the holding position, is directed into the through-opening (5), **characterized in that** the cutout (15) is adapted to the shape of a corner geometry (21) of the container (6).

2. Block storage arrangement according to claim 1, **characterized in that** the holding latch (8) has a pivot axis (14) which encloses an angle of less than 75° with both a longitudinal direction (9) and a transverse direction (10) of the through-opening (5).

3. Block storage arrangement according to claim 1 or 2, **characterized in that** the cutout (15) is V-shaped.

4. Block storage arrangement according to one of the claims 1 to 3, **characterized in that** the cutout (15) has two side flanks (16, 17) whose ends directed into the through-opening (5) form an angle in the range from 75° to 105° with one another.

5. Block storage arrangement according to one of claims 1 to 4, **characterized in that** the container (6) has a container opening (22) which is surrounded by a container wall (23), and the corner geometry (21) is arranged at that end of the container wall (23) which faces away from the container opening (22).

6. Block storage arrangement according to claim 5, **characterized in that** the container wall (2) has a recess (24) in the region of the corner geometry (21).

7. Block storage arrangement according to one of claims 1 to 6, **characterized in that** the container (6) has a container bottom (25) and the corner geometry (21) extends in the direction of the container opening (22) at most as far as the container bottom (25).

8. Block storage arrangement according to one of Claims 5 to 7, **characterized in that** the container wall (23) has a longitudinal side (26) and a transverse side (27) which are arranged essentially at a right angle to one another and are connected to one another by a connecting wall (28) which is arranged between the corner geometry (21) and the container opening (22) and encloses an angle of at most 150° with the longitudinal side (26) and the transverse side (27) in each case.

9. Block storage arrangement according to claim 8, **characterized in that** in the release position the holding latch (8) is sunk into a depression (20) of a guide element (18).

10. Block storage arrangement according to claim 9, **characterized in that** the guide element (18) has a contour which is matched to the shape of the connecting wall (28).

11. Block storage arrangement according to claim 9 or 10, **characterized in that** the guide element (18) has an insertion chamfer (19) on its upper side and/or on its lower side in the direction of gravity.

## Revendications

1. Agencement d'entreposage en blocs (1) avec plusieurs espaces de réception de conteneurs (2), au moins un conteneur (6), un espace de chargement (3) disposé dans la direction de la force de gravité en dessous des espaces de réception de conteneurs (2), une ouverture de passage (5) entre chaque espace de réception de conteneurs (2) et l'espace de chargement (3) et un système de maintien (7) sur l'ouverture de passage (5), qui comporte au moins un verrou de maintien (8), qui peut pivoter entre une position de maintien et une position de libération, sachant que le verrou de maintien (8) comporte une découpe (15), qui est dirigée dans la position de maintien dans l'ouverture de passage (5), **caractérisé en ce que** la découpe (15) est adaptée à la forme d'une géométrie d'angle (21) du conteneur (6).

2. Agencement d'entreposage en blocs selon la revendication 1, **caractérisé en ce que** le verrou de maintien (8) comporte un axe de pivotement (14), qui forme tant avec une direction longitudinale (9) qu'avec une direction transversale (10) de l'ouverture de passage (5) un angle inférieur à 75°.

3. Agencement d'entreposage en blocs selon la revendication 1 ou 2, **caractérisé en ce que** la découpe (15) est constituée en forme de V.

4. Agencement d'entreposage en blocs selon l'une quelconque des revendications 1 à 3, **caractérisé en ce que** la découpe (15) comporte deux flancs latéraux (16, 17), dont les extrémités dirigées dans l'ouverture de passage (5) forment entre elles un angle dans la plage de 75° à 105°.

5. Agencement d'entreposage en blocs selon l'une quelconque des revendications 1 à 4, **caractérisé en ce que** le conteneur (6) comporte une ouverture de conteneur (22), qui est entourée par une paroi de conteneur (23) et la géométrie d'angle (21) est disposée à l'extrémité éloignée de l'ouverture de conteneur (22) de la paroi de conteneur (23).

6. Agencement d'entreposage en blocs selon la revendication 5, **caractérisé en ce que** la paroi de conteneur (2) comporte un retrait (24) dans la zone de la géométrie d'angle (21).

7. Agencement d'entreposage en blocs selon l'une quelconque des revendications 1 à 6, **caractérisé en ce que** le conteneur (6) comporte un fond de conteneur (25) et la géométrie d'angle (21) s'étend en direction de l'ouverture de conteneur (22) au maximum comme le fond de conteneur (25).

8. Agencement d'entreposage en blocs selon l'une quelconque des revendications 5 à 7, **caractérisé en ce que** la paroi de conteneur (23) comporte un côté longitudinal (26) et un côté transversal (27), qui sont disposés pour l'essentiel sous un angle droit l'un par rapport à l'autre et reliés l'un à l'autre par une paroi de liaison (28), qui est disposée entre la géométrie d'angle (21) et l'ouverture de conteneur (22) et forme respectivement un angle maximal de 150° avec le côté longitudinal (26) et le côté transversal (27).

9. Agencement d'entreposage en blocs selon la revendication 8, **caractérisé en ce que** le verrou de maintien (8) est noyé dans la position de libération dans une cavité (20) d'un élément de guidage (18).

10. Agencement d'entreposage en blocs selon la revendication 9, **caractérisé en ce que** l'élément de guidage (18) comporte un profil qui est adapté à la forme de la paroi de liaison (28).

11. Agencement d'entreposage en blocs selon la revendication 9 ou 10, **caractérisé en ce que** l'élément de guidage (18) comporte un chanfrein d'insertion (19) sur son côté supérieur en direction de la force de gravité et/ou sur son côté inférieur en direction de la force de gravité.
